(19) **Europäisches Patentamt**

**European Patent Office**

**Office européen des brevets**

(11) **EP 0 784 215 B1**

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(51) Int Cl.$^7$: **G01V 3/10**, G10K 15/00

(21) Anmeldenummer: **96119818.1**

(22) Anmeldetag: **10.12.1996**

(54) **Sensoranordnung und Verfahren zur Erfassung von physikalischen Grössen**

Transducer arrangement and method to detect physical quantities

Arrangement de capteur et procédé pour déterminer des grandeurs physiques

(84) Benannte Vertragsstaaten:
**AT DE DK FR GB NL**

(30) Priorität: **09.01.1996 DE 29600286 U**

(43) Veröffentlichungstag der Anmeldung:
**16.07.1997 Patentblatt 1997/29**

(73) Patentinhaber: **FIRMA ING. KLAUS EBINGER D-51149 Köln (DE)**

(72) Erfinder: **Ebinger, Klaus 51143 Köln (DE)**

(74) Vertreter: **Heim, Hans-Karl, Dipl.-Ing. et al Weber & Heim Patentanwälte Irmgardstrasse 3 81479 München (DE)**

(56) Entgegenhaltungen:
**EP-A- 0 408 320      EP-A- 0 744 627**
**DE-A- 3 922 556      US-A- 3 780 368**

**Beschreibung**

Die Erfindung betrifft eine Sensoranordnung zur Erfassung von physikalischen Größen im Boden, im Wasser oder in anderen, insbesondere nichtmetallenen Medien nach dem Oberbegriff des Anspruchs 1.

Die Erfindung betrifft weiterhin ein Verfahren zur Erfassung von physikalischen Größen im Boden, im Wasser oder in anderen, insbesondere nichtmetallenen Medien, nach dem Oberbegriff des Patentanspruchs 10.

Eine gattungsgemäße Sensoranordnung ist beispielsweise in der DE 39 22 556 A1 offenbart und weist einen Schwingkreis auf, der an der zu untersuchenden Stelle plaziert ist und mindestens ein variables Element aufweist. Weiterhin weist die Sensoranordnung einen Sensor zum Erfassen einer physikalischen Größe auf, der mit dem mindestens einen variablen Element in Wirkverbindung steht, sowie eine Empfangseinheit zur Detektion einer von dem Schwingkreis abgegebenen Sekundärstrahlung, welche mit der von dem Sensor erfassten physikalischen Größen korreliert ist.

Bei einem gattungsgemäßen Verfahren wird ein Schwingkreis an einer zu untersuchenden Stelle plaziert und über eine Sendeeinrichtung ein elektromagnetisches Feld ausgestrahlt, welches den Schwinkreis erregt. Weiterhin wird von dem erregten Schwingkreis eine Sekundärstrahlung abgegeben, deren Eigenschaften mit einer physikalischen Größe korrelieren, welche von einem Sensor an der zu untersuchenden Stelle erfaßt wird, und es wird die Sekundärschwingung empfangen und ausgewertet.

Bei der DE 39 22 556 A1 ist die Sensoranordnung insgesamt sehr aufwendig aufgebaut, wobei zur Aufbereitung eines Sensorsignals eine separate Signalaufbereitungsschaltung in der Sensoranordnung vorgesehen ist. Weiterhin ist in der Sensoreinheit eine allgemeine Spannungsversorgung vorgesehen. Der apparative Gesamtaufwand ist dementsprechend hoch, was sich im Hinblick auf die Kosten, den Platzbedarf und die Störanfälligkeit negativ auswirkt.

In der EP 0 744 627 A1 ist ein Transponder-System für die Fernübermittlung einer gemessenen physikalischen Größe beschrieben. Dabei ist ein Oszillator vorgesehen, dessen Schwingungsfrequenz von der Ausgabe eines Mess-Sensors abhängt. Die messwertabhängige Schwingungsfrequenz wird einer Verarbeitungslogik zugeführt, welche die Dämpfung eines Empfänger/Sende-Schwingkreises verändert. Die darin enthaltene Information über die fragliche Messgröße ist über eine Sende-Empfangseinheit fernabfragbar.

In der EP 0 600 374 A1 ist eine Transponderanordnung mit einer Abfrage- und einer Antworteinheit beschrieben, bei der die Abfrageeinheit eine Programmier-Sequenz und wenigstens einen Abfragepuls übermittelt. Die Antworteinheit beinhaltet eine Empfängereinheit zum Empfang von Daten der Programmier-Sequenz und übermittelt nach Empfang des Abfragepulses Daten zurück zur Abfrageinheit in Form eines modulierten Radiofrequenz-Signals. Hierbei können dauerhaft gespeicherte Informationen oder ein aufbereitetes Messsignal eines Sensors übertragen werden.

Sowohl bei der EP 0 744 627 A1 als auch bei der EP 0 600 374 A1 wird eine dem Sensor nachgeordnete, vergleichsweise aufwendige Verarbeitungselektronik benötigt. Weiterhin werden in diesen Druckschriften nicht Sonden zur Untersuchung von Bodenverschiebungen beschrieben.

Zur Untersuchung des Erdbodens und zum Erfassen von bodenmechanischen Änderungen treibt man Holzpflöcke ein, oder vergräbt Bänder und Folien, die man nachträglich ausgräbt, um die Änderung der Bodenstruktur festzustellen. Bekannt ist es auch, passive Unterflurmarken, die aus einem LC-Schwingkreis bestehen, als Zielpunkte in den Erdboden zu verlegen. Die Wirkung dieser Unterflurmarken besteht darin, daß sie durch ein elektromagnetisches Wechselfeld oder auch durch Magnetpulse erregt werden, wodurch sie ein sekundäres Antwortsignal abgeben, welches der Eigenfrequenz des Schwingkreises entspricht. Auf diese Weise kann die Lage detektiert werden und festgestellt werden, ob sich die Unterflurmarke verschoben hat.

Der Erfindung liegt die **Aufgabe** zugrunde, eine Sensoranordnung und ein Verfahren der eingangs genannten Art zu schaffen, mit denen neben einer Positionsbestimmung auch eine qualitative und/oder quantitative Bestimmung physikalischer Größen im Boden, im Wasser oder in anderen nichtmetallenen Medien möglich ist. Die Sensoranordnung soll außerdem besonders einfach und kostengünstig aufgebaut sein.

Die Lösung dieser Aufgabe erfolgt vorrichtungsmäßig mit den kennzeichnenden Merkmalen des Anspruchs 1 und verfahrensmäßig mit den kennzeichnenden Merkmalen des Anspruchs 10. Vorteilhafte Weiterbildungen sind in den Unteransprüchen beschrieben.

Nach einem wesentlichen Gedanken der Erfindung ist das mindestens eine variable Element des Schwingkreises direkt als Sensor zum Erfassen der physikalischen Größe ausgebildet.

Mit einer solchen erfindungsgemäßen Sensoranordnung ist es möglich, ein Sensorelement im Boden, im Wasser, im Mauerwerk oder an einer anderen schwer zugänglichen Stelle, die untersucht werden soll, abzufragen. Die Umgebung wirkt auf das verlegte Element und insbesondere den darin vorhandenen Sensor ein, der den Schwingkreis entsprechend verändert, so daß das Schwingkreisverhalten direkt mit der untersuchten physikalischen Größe korreliert ist und das so empfangene Signal detektiert und ausgewertet werden kann. Darüber hinaus kann gleichzeitig auch eine exakte Positionsbestimmung mit dem empfangenen Signal des Schwingkreises durchgeführt werden.

Ein Verfahren der oben angegebenen Art ist erfindungsgemäß dadurch weitergebildet, dass in Abhängigkeit der physikalischen Größe ein als Sensor ausgebildetes variables Element des Schwingkreises seine physikalischen Eigenschaften ändert und dass von dem Schwingkreis eine Sekundärstrahlung entsprechend den veränderten physikalischen Eigenschaften des variablen Elements abgegeben wird. Die Aktivierung des Schwingkreises erfolgt bevorzugt mit Pulsen. Hierdurch ist eine bessere Abstimmung auf die Resonanzfrequenz und ein verbessertes Sekundärsignal möglich.

Der Schwingkreis sensiert mit seinen Komponenten oder einem hierzu geschalteten Sensor die physikalischen Umgebungsbedingungen und es wird eine Sekundärschwingung entsprechend der geänderten Komponenten des Schwingkreises abgegeben und diese Sekundärstrahlung wird empfangen und ausgewertet.

In einer bevorzugten Ausführungsform der Erfindung ist die Sensoranordnung passiv ausgelegt. Das bedeutet, daß im wesentlichen der Schwingkreis an der zu untersuchenden Stelle plaziert ist und durch ein von außen gesendetes elektromagnetisches Wechselfeld oder durch Magnetpulse angeregt wird und daraufhin ein Sekundärsignal abgibt.

Alternativ ist auch die Ausbildung eines aktiven Elements möglich, wobei dann zusätzlich zu dem Schwingkreis eine Energiespeicherung vorgesehen werden kann, z.B. in Form eines Akkus oder einer Batterie, und der Schwingkreis vorzugsweise in regelmäßigen Abständen von sich aus ein Signal abgibt. Geeigneterweise kann der Schwingkreis hierbei über einen, z.B. mittels des Schwingkreises selbst, aktivierbaren Transponder abgefragt werden.

Bei der Erfindung ist das variable Element des Schwingkreises direkt als Sensor zum Erfassen der physikalischen Größe ausgelegt. Anders ausgedrückt könnte man auch sagen, daß der Sensor direkt ein Element des Schwingkreises ist. Dadurch verringert sich die Zahl der benötigten Teile und damit auch grundsätzlich die Fehleranfälligkeit einer Gesamtanordnung.

Das variable Element im Schwingkreis beeinflußt den Schwingkreis bevorzugt so, daß die Frequenz oder das Abklingverhalten des Schwingkreises veränderbar ist. Dadurch ändert sich entweder die Frequenz entsprechend der Änderung der physikalischen Größe oder der Abklingvorgang der sinusförmigen Rückantwort, der nach einer e-Funktion ausklingt. Bei einer hohen Schwingkreisgüte ist der Abklingvorgang lang und bei einem gedämpften Schwingkreis wird der Abklingvorgang verkürzt. Die zeitlichen Vorgänge können gemessen und entsprechend ausgewertet werden.

Zur Veränderung des Schwingkreisverhaltens ist in einer Ausführungsform der Erfindung ein magnetischer Kern veränderbar in der Induktivität des Schwingkreises angeordnet. Dieser kann abhängig von mechanischen Änderungen in die Spule eingeschoben werden, so daß sich die Induktivität und damit die Frequenz des Schwingkreises ändert. Zur Erfassung eines Wasserstandsniveaus kann beispielsweise ein solcher Kern mit einem Schwimmer verbunden sein und mit steigendem Wasserstand weiter in die Spule eingeschoben werden. Andererseits ist es auch möglich, den Kern mit einer Platte zu verbinden, die sich abhängig von Bodenverschiebungen bewegt. Weiterhin kann der magnetische Kern, der beispielsweise ein Ferritkern sein kann, auch in der Spule aufgehängt werden und die Spule selbst senkrecht an der zu untersuchenden Stelle positioniert werden. Bei einer Lageänderung der Spule verändert sich die Position des Kerns in der Spule und damit auch die Antwortfrequenz.

Ebenso wie die Induktivität kann auch die Kapazität variabel ausgebildet sein und auf diese Weise die Frequenz des Schwingkreises verändern.

In einer bevorzugten Ausführungsform wird ein variabler Widerstand parallel an den eigentlichen Schwingkreis angeschlossen. Durch Veränderung des Widerstands ändert sich die Dämpfung und damit das Abklingverhalten des Schwingkreises. Beispielsweise können Sensoren für Luftfeuchtigkeit und/oder Temperatur parallel an den Schwingkreis geschaltet werden, deren Impedanz sich von etwa 10 kΩ bis 1 MΩ in Abhängigkeit von der gemessenen physikalischen Größe verändert.

In einer anderen Weiterbildung der Erfindung weist die Sensoranordnung zwei oder mehr Schwingkreise auf, wobei jedem Schwingkreis die Information für eine physikalische Größe zugeordnet ist. Dazu kann beispielsweise auf einem Kern eine Wicklung mit verschiedenen Anzapfungen aufgebracht werden, die einzelne Schwingkreise mit unterschiedlichen Frequenzen darstellen. Jede einzelne Frequenz kann selektiv aufgenommen und als physikalische Größe ausgewertet werden. Werden dicht benachbarte Antwortfrequenzen verwendet, so kann auch das Mischprodukt aus beiden Frequenzen zur Auswertung kommen. Dies hat den Vorteil der guten Störunterdrückung von vagabundierenden Wechselfeldern, die in der Nähe der Antwortfrequenz liegen können. Der Kern einer solchen Mehrfrequenzmarke ist bevorzugt in Stabform oder Ringform hergestellt. Auch hier ist es möglich, jeden Schwingkreis entweder auf seine Frequenz oder auf sein Abklingverhalten zu untersuchen. Bevorzugt wird jedoch jedem Schwingkreis eine andere Frequenz zugeordnet und jeweils die Frequenzverschiebung ausgewertet.

Auch kann der Schwingkreis als Luftspule, also ohne Kern, realisiert sein.

In einer anderen Ausführungsform kann die Sendeanordnung auch in Transpondertechnik ausgebildet sein, wobei der Transponder entweder selbst batteriebetrieben ist oder seine Energie aus dem Sendesignal bezieht.

Bevorzugt werden Schwingkreise mit einer Frequenz zwischen 10 kHz und 30 MHz eingesetzt. Abhängig von den Einsatzbereichen sind auch andere Frequenzen, z.B. im Bereich 1 kHz bis 300 MHz, anwendbar.

Eine solche Sensoranordnung kann in einer Vielzahl von verschiedenen Bereichen zum Einsatz kommen. Beispielsweise kann ein auf Wasser ansprechender Sensor im Bereich von Mülldeponien oder auch in der Wasserversorgung zur Überwachung kritischer Stellen eingesetzt werden. Auch im Mauerwerk in Gebäuden kann die erfindungsgemäße Sensoranordnung in der Nähe von Wasserrohren beispielsweise zum Detektieren eines Wasserrohrbruchs Verwendung finden. Auch die telemetrische Übertragung von Temperaturdaten, Feuchtigkeitsdaten, bodenmechanischen Änderungen, Verschiebungen und Verdichtungen können detektiert werden. Im Prinzip kann jede meßbare physikalische Größe und insbesondere jede geophysikalische Veränderung mit der erfindungsgemäßen Sensoranordnung erfaßt werden.

Dazu gehören insbesondere auch neben den Boden-Verdichtungsmessungen auf Mülldeponien, die Wanderung und/oder Auflösung von Deichen, Untergrundprüfungen bei aufgeschlämmten Straßen und Erdverschiebungen oder Erdverdichtungen in Gebirgen, z.B. in den Alpen.

Nachfolgend wird die Erfindung anhand von in der Zeichnung dargestellten Ausführungsbeispielen näher erläutert. Im einzelnen zeigen die schematischen Darstellungen in:

Fig. 1     einen Schwingkreis;

Fig. 2     einen Schwingkreis mit variablen Elementen;

Fig. 3     Diagramme des Abklingverhaltens eines erfindungsgemäßen Schwingkreises;

Fig. 4     eine Schaltung mit mehreren Schwingkreisen; und

Fig. 5     eine Sensoranordnung zum Messen des Grundwasserspiegels und/oder von Bodenverschiebungen.

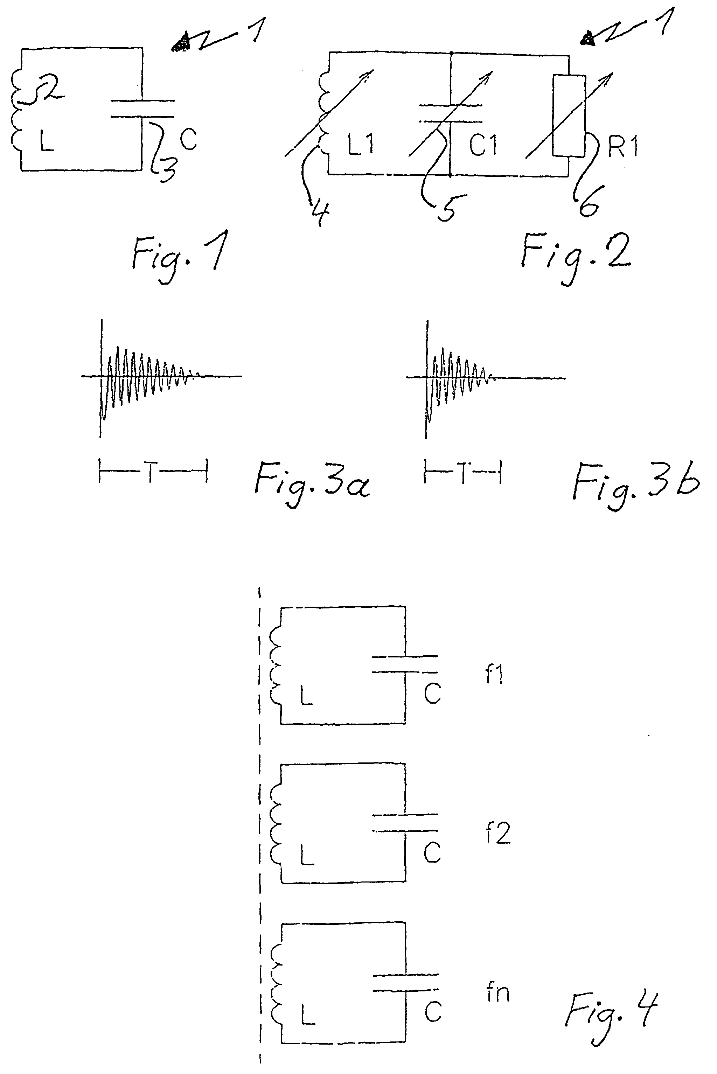

In Fig. 1 ist ein üblicher Schwingkreis 1 mit einer Induktivität 2 und einer Kapazität 3 dargestellt, wie er in bekannten Unterflurmarken zur Positionsbestimmung eingesetzt wird. Die Frequenz eines solchen Schwingkreises berechnet sich bekanntermaßen nach $f = 1/(2\pi\sqrt{L.\,C})$.

In Fig. 2 ist ein Schwingkreis 1 dargestellt, der eine variable Induktivität 4, eine variable Kapazität 5 und einen parallel zum Schwingkreis geschalteten variablen Widerstand 6 aufweist. Die Induktivität, die auch als L1 bezeichnet ist, wird üblicherweise als Spule ausgebildet. Die Kapazität, die auch mit C1 bezeichnet ist, wird von einem Kondensator gebildet. Der Widerstand bzw. die Impedanz ist auch mit R1 bezeichnet. Die zu sensierende physikalische Größe wirkt nun direkt oder indirekt auf eines der variablen Elemente und verändert dadurch das Schwinkreisverhalten. Bei Veränderung der Induktivität L1 oder der Kapazität C1 verändert sich die Frequenz, bei Veränderung des Widerstands R1 verändert sich das Abklingverhalten.

In Fig. 3 ist das Abklingverhalten eines angepulsten Schwingkreises dargestellt, dessen sinusförmige Schwingungen nach einer e-Funktion abklingen. Die in Fig. 3a dargestellte längere Abklingzeit kommt durch eine geringe Bedämpfung durch den Widerstand R1, also in dem hier parallel geschalteten variablen Widerstand durch einen großen Widerstand zustande. Das in Fig. 3b gezeigte schnelle Abklingverhalten ist Folge einer hohen Bedämpfung durch einen kleinen, parallel geschalteten Widerstand. Ebenso könnte ein variabler Widerstand natürlich in Reihe in den Schwingkreis geschaltet werden.

In Fig. 4 ist schematisch eine Mehrfrequenzsensoranordnung dargestellt, die drei Schwingkreise mit unterschiedlichen Frequenzen aufweist. Die drei Schwingkreise sind auf einem Ferritkern angeordnet und die entstehenden Frequenzen werden ausgewertet. Bei Mischung von lediglich zwei Frequenzen entsteht eine Überlagerungsfrequenz, die ebenfalls ausgewertet und besonders empfindlich aufbereitet werden kann. Bei Frequenzen von 30 kHz und 33 kHz entsteht beispielsweise eine Überlagerungsfrequenz von 3 kHz. Die Mehrfrequenzmarke kann also mit den hier dargestellten drei Schwingkreisen beispielsweise Temperatur, Feuchtigkeit und bodenmechanische Verdichtungen messen. Dabei können mechanische, variable Bauelemente beliebig mit einem Sensor gekoppelt werden, der die gemessene geophysikalische Veränderung in eine Bewegung umsetzt. Die Überlagerungsfrequenz einer solchen Mehrfrequenzmarke ergibt sich aus

$$f_{\ddot{u}} = f_1 +/- \left( f_2 - f_n \right)$$

wobei $f_{\ddot{u}}$ die Überlagerungsfrequenzen und $f_1$ bis $f_n$ die Eigenfrequenzen der Schwingkreise 1 bis n bezeichnen.

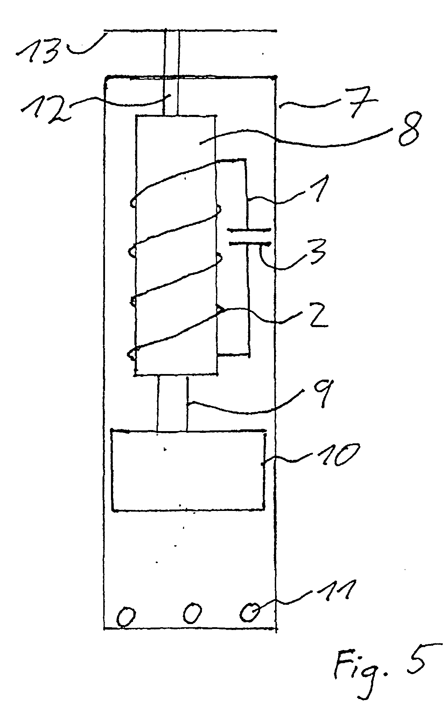

Ein Ausführungsbeispiel einer erfindungsgemäßen Sensoranordnung ist in Fig. 5 dargestellt. In einem Gehäuse 7 ist ein Schwingkreis 1 mit einer Induktivität 2 und einer Kapazität 3 angeordnet. In der Induktivität 2 befindet sich ein magnetischer Kern 8, dessen Lage in der Induktivität 2 veränderbar ist. Der magnetische Kern 8 kann in der Induktivität verschoben werden und verändert dadurch die Eigenfrequenz des Schwingkreises 1. Der magnetische Kern 8 ist über eine Verbindungsstange 12 mit einer Bodenplatte 13 verbunden, auf die durch den umliegenden Erdboden Druck ausgeübt wird. Kommt es im Bereich der Bodenplatte 13 zu Verschiebungen, so wird dadurch der Kern 8 in der Induktivität verschoben und so die Eigenfrequenz des Schwingkreises verändert.

In einer anderen Alternative, ohne obere Bodenplatte 13, können in dem Gehäuse 7 im unteren Bereich Löcher 11 angeordnet werden, durch die Wasser eindringen kann, so daß in dem Gehäuse 7 ein Flüssigkeitsniveau vorhanden ist, wie es auch dem der Umgebung entspricht. Dadurch wird ein Schwimmer 10 mit steigendem Grundwasserspiegel nach oben gedrückt und bei fallendem Grundwasserspiegel mit diesem gesenkt. Über eine mechanische Verbindung 9 ist der Schwimmer 10 mit dem magnetischen Kern 8 verbunden, so daß auch der magnetische Kern 8 den Bewegungen des Grundwasserspiegels folgt. Mit dieser Sensoranordnung kann also entweder eine bodenmechanische Veränderung oder der Grundwasserspiegel gemessen und über das Schwingkreisverhalten ausgewertet werden.

**Patentansprüche**

1. Sensoranordnung zur Erfassung von physikalischen Größen im Boden, im Wasser oder in anderen, insbesondere nichtmetallenen Medien, mit einem Schwingkreis (1), der an der zu untersuchenden Stelle plaziert ist und mindestens ein variables Element (4, 5, 6) aufweist,
mit einem Sensor zum Erfassen einer physikalischen Größe, der mit dem mindestens einen variablen Element (4, 5, 6) in Wirkverbindung steht, und mit einer Empfangseinheit zur Detektion einer von dem Schwingkreis (1) abgegebenen Sekundärstrahlung, welche mit der von dem Sensor erfassten physikalischen Größe korreliert ist,
**dadurch gekennzeichnet,**
**daß** das mindestens eine variable Element (4, 5, 6) des Schwingkreises (1) direkt als Sensor zum Erfassen der physikalischen Größe ausgebildet ist.

2. Sensoranordnung nach Anspruch 1,
**dadurch gekennzeichnet,**
**daß** die Sensoranordnung passiv oder aktiv ausgelegt ist.

3. Sensor nach einem der vorhergehenden Ansprüche,
**dadurch gekennzeichnet,**
**daß** die Frequenz oder das Abklingverhalten des Schwingkreises (1) veränderbar ist.

4. Sensoranordnung nach einem der vorhergehenden Ansprüche,
**dadurch gekennzeichnet,**
**daß** ein magnetischer Kern (8) relativ verschiebbar zu/in einer Induktivität (4) des Schwingkreises (1) vorgesehen ist, und
**daß** der magnetische Kern (8) in die Induktivität (4) einschiebbar ist.

5. Sensoranordnung nach einem der vorhergehenden Ansprüche,
**dadurch gekennzeichnet,**
**daß** eine variable Induktivität (4) oder eine variable Kapazität (5) als variables Element des Schwingkreises (1) vorgesehen ist.

6. Sensoranordnung nach einem der vorhergehenden Ansprüche,
**dadurch gekennzeichnet,**
**daß** ein variabler Widerstand (6) zur Veränderung des Abklingverhaltens des Schwingkreises (1) vorgesehen ist.

7. Sensoranordnung nach einem der vorhergehenden Ansprüche,
**dadurch gekennzeichnet,**
**daß** die Sensoranordnung zwei oder mehr Schwingkreise (1) aufweist, wobei jedem Schwingkreis (1) die Information für eine physikalische Größe zugeordnet ist, und
**daß** der oder die Schwingkreise (1) als Luftspule, oder auf einem zylindrischen oder ringförmigen Kern ausgebildet sind.

8. Sensoranordnung nach einem der vorhergehenden Ansprüche,
**dadurch gekennzeichnet,**
**daß** der Schwingkreis (1) insbesondere eine Frequenz zwischen 10 kHz und 30 MHz aufweist.

9. Sensoranordnung nach einem der vorhergehenden Ansprüche,
**dadurch gekennzeichnet,**
**daß** der Schwingkreis (1) mit einem aktivierbaren Transponder ausgestattet ist.

10. Verfahren zur Erfassung von physikalischen Größen im Boden, im Wasser oder in anderen, insbesondere nicht metallenen Medien, bei dem ein Schwingkreis (1) an einer zu untersuchenden Stelle plaziert wird,
über eine Sendeeinrichtung ein elektromagnetisches Feld ausgestrahlt wird, welches den Schwingkreis (1) erregt,
von dem erregten Schwingkreis (1) eine Sekundärstrahlung abgegeben wird, deren Eigenschaften mit einer physikalischen Größe korrelieren, welche von einem Sensor an der zu untersuchenden Stelle erfasst wird, und bei dem die Sekundärstrahlung empfangen und ausgewertet wird,
**dadurch gekennzeichnet,**
**daß** in Abhängigkeit der physikalischen Größe ein als Sensor ausgebildetes variables Element (4, 5, 6) des Schwingkreises (1) seine physikalischen Eigenschaften ändert und
**daß** von dem Schwingkreis (1) eine Sekundärstrahlung entsprechend den veränderten physikalischen Eigenschaften des variablen Elements (4, 5, 6) abgegeben wird.

11. Verfahren nach Anspruch 10,

**dadurch gekennzeichnet,**

**daß** über die Sendeeinrichtung ein pulsförmiges Feld ausgestrahlt wird.

## Claims

1. Sensor arrangement for determining physical quantities in the soil, water or in other, particularly nonmetallic media, having a resonant circuit (1), which is located at the point to be investigated and having at least one variable element (4, 5, 6), with a sensor for determining a physical quantity, which is in operative connection with the at least one variable element (4, 5, 6), and
with a receiving unit for detecting a secondary radiation emitted by the resonant circuit (1) and which is correlated with the physical quantity determined by the sensor,
**characterized in that**
the at least one variable element (4, 5, 6) of the resonant circuit (1) is constructed directly as a sensor for determining the physical quantity.

2. Sensor arrangement according to claim 1,
**characterized in that**
the sensor arrangement is actively or passively designed.

3. Sensor according to one of the preceding claims,
**characterized in that**
the frequency or decay behaviour of the resonant circuit (1) is variable.

4. Sensor arrangement according to one of the preceding claims,
**characterized in that**
a magnetic core (8) is provided in relatively displaceable manner to/in an inductor (4) of the resonant circuit (1) and that the magnetic core (8) can be inserted in the inductor (4).

5. Sensor arrangement according to one of the preceding claims,
**characterized in that**
a variable inductor (4) or a variable capacitor (5) is provided as the variable element of the resonant circuit (1).

6. Sensor arrangement according to one of the preceding claims,
**characterized in that**
a variable resistor (6) is provided for varying the decay behaviour of the resonant circuit (1).

7. Sensor arrangement according to one of the preceding claims,
**characterized in that**

the sensor arrangement has two or more resonant circuits (1), the information for a physical quantity being associated with each resonant circuit (1) and that the resonant circuit or circuits (1) are constructed as an air coil, or on a cylindrical or annular core.

8. Sensor arrangement according to one of the preceding claims,
**characterized in that**
the resonant circuit (1) more particularly has a frequency between 10 kHz and 30 MHz.

9. Sensor arrangement according to one of the preceding claims,
**characterized in that**
the resonant circuit (1) is equipped with an activatable transponder.

10. Method for determining physical quantities in the soil, water or in other, particularly nonmetallic media, in which
a resonant circuit (1) is located at a point to be investigated, by means of a transmitting device an electromagnetic field is transmitted, which excites the resonant circuit (1),
the excited resonant circuit (1) emits a secondary radiation, whose characteristics correlate with a physical quantity, which is determined by a sensor at the point to be investigated and in which the secondary radiation is received and evaluated,
**characterized in that**
as a function of the physical quantity a variable element (4, 5, 6) of the resonant circuit (1) constructed as a sensor changes its physical characteristics and
that the resonant circuit (1) emits a secondary radiation corresponding to the changed physical characteristics of the variable element (4, 5, 6).

11. Method according to claim 10, **characterized in that** a pulse-shaped field is transmitted by means of the transmitting device.

## Revendications

1. Arrangement de capteur pour déterminer des grandeurs physiques dans le sol, dans l'eau ou dans d'autres milieux, en particulier non-métalliques, avec un circuit oscillant (1) qui est placé sur la zone à étudier et présente au moins un élément variable (4, 5, 6),
avec un capteur pour déterminer une grandeur physique, qui est en liaison active avec l'élément variable (4, 5, 6) au nombre d'au moins un, et
avec une unité réceptrice pour détecter un rayonnement secondaire délivré par le circuit oscillant (1), rayonnement qui est corrélé à la grandeur physique déterminée par le capteur,
**caractérisé**

**en ce que** l'élément variable (4, 5, 6), au nombre d'au moins un, du circuit oscillant (1) est conformé directement en capteur pour déterminer la grandeur physique.

2. Arrangement de capteur selon la Revendication 1, **caractérisé**

    **en ce que** l'arrangement de capteur est conçu passif ou actif.

3. Arrangement de capteur selon l'une quelconque des Revendications précédentes, **caractérisé** **en ce que** la fréquence ou le comportement de décroissance du circuit oscillant (1) est modifiable.

4. Arrangement de capteur selon l'une quelconque des Revendications précédentes,
    **caractérisé**

    **en ce qu'**un noyau magnétique (8) est prévu mobile par rapport à/dans une inductance (4) du circuit oscillant (1), et

    **en ce que** le noyau magnétique (8) peut être introduit dans l'inductance (4).

5. Arrangement de capteur selon l'une quelconque des Revendications précédentes, **caractérisé** **en ce qu'**une inductance variable (4) ou une capacité variable (5) est prévue comme élément variable du circuit oscillant (1).

6. Arrangement de capteur selon l'une quelconque des revendications précédentes, **caractérisé** **en ce qu'**une résistance variable (6) est prévue pour modifier le comportement de décroissance du circuit oscillant (1).

7. Arrangement de capteur selon l'une quelconque des Revendications précédentes,
    **caractérisé**

    **en ce que** l'arrangement de capteur présente-deux ou plusieurs circuits oscillants (1), à chaque circuit oscillant (1) étant associée l'information correspondant à une grandeur physique, et

    **en ce que** le ou les circuit (s) oscillant(s) (1) est(sont) conformés en bobine sans fer ou sur un noyau cylindrique ou annulaire.

8. Arrangement de capteur selon l'une quelconque des Revendications précédentes, **caractérisé** **en ce que** circuit oscillant (1) présente en particulier une fréquence comprise entre 10 kHz et 30 MHz.

9. Arrangement de capteur selon l'une quelconque des Revendications précédentes, **caractérisé** **en ce que** le circuit oscillant (1) est équipé d'un transpondeur activable.

10. Procédé pour déterminer des grandeurs physiques dans le sol, dans l'eau ou dans d'autres milieux, en particulier non-métalliques, dans lequel

    un circuit oscillant (1) est placé sur une zone à étudier,

    un champ magnétique est émis par un dispositif émetteur, champ qui excite le circuit oscillant (1),

    le circuit oscillant (1) excité émet un rayonnement secondaire dont les propriétés sont corrélées à une grandeur physique qui est déterminée par un capteur dans la zone à étudier,

    et dans lequel le rayonnement secondaire est reçu et exploité,
    **caractérisé**

    **en ce qu'**en fonction de la grandeur physique, un élément variable (4, 5, 6) conformé en capteur du circuit oscillant (1) modifie ses propriétés physiques, et

    **en ce qu'**un rayonnement secondaire correspondant aux propriétés physiques modifiées de l'élément variable (4, 5, 6) est émis par le circuit oscillant (1).

11. Procédé selon la Revendication 10,
**caractérisé**
**en ce qu'**un champ en forme d'impulsions est émis par l'intermédiaire du dispositif émetteur.

Fig. 1

Fig. 2

Fig. 3a

Fig. 3b

Fig. 4

Fig. 5